# EUROPÄISCHE PATENTSCHRIFT

(11) **EP 1 243 224 B1**
(45) Veröffentlichungstag und Bekanntmachung des Hinweises auf die Patenterteilung: **14.05.2008**
(21) Anmeldenummer: 02005340.1
(22) Anmeldetag: 14.03.2002
(51) Int. Cl.: A61C 1/00

(54) **Dentalgerät mit einer Einrichtung zum Anschluss eines Fluidbehälters, sowie Fluidbehälter**
Dental device with an arrangement for connecting a fluid container, as well as fluid container
Appareil dentaire avec dispositif pour la connexion d'un récipient de fluides, ainsi que récipient de fluides

(30) Priorität: 23.03.2001 DE 10114331
(43) Veröffentlichungstag der Anmeldung: 25.09.2002
(73) Patentinhaber: Ferton Holding SA, 2800 Delémont (CH)
(72) Erfinder: Decosterd, Christian, 1195 Dully (CH); Beerstecher, Lutz, 1277 Borex (CH)
(74) Vertreter: Müller, Frank Peter

(56) Entgegenhaltungen:
- EP-A- 0 097 288
- EP-A- 0 268 948
- EP-A- 0 870 477

## Beschreibung

Die Erfindung bezieht sich auf ein Dentalgerät mit einer Einrichtung zum Anschluß eines Fluidbehälters gemäß Anspruch 5.

Die Erfindung bezieht sich gleichfalls auf einen Fluidbehälter gemäß Anspruch 1, der zur Verwendung bei einem Dentalgerät der vorgenannten Art vorgesehen ist und somit ein Fluid enthält, das bei einem Dentalgerät zur Versorgung eines für eine Zahnbehandlung verwendeten Handstückes vorgesehen ist.

Aus der EP 0 268 948 B1 ist ein Dentalgerät bekannt. Der Anschluß eines Fluidbehälters ist dabei mit einer für Flaschen vorgesehenen Verschlußeinrichtung realisiert. Die Verschlußeinrichtung ist mit einer zur Abdekkung der Flaschenöffnung vorgesehenen ersten Verschlußscheibe und einer darüber angeordneten zweiten Verschlußscheibe ausgebildet. Die beiden Verschlußscheiben weisen eine mit einem gleichen Mittenabstand außermittig ausgebildete Auslaßöffnung auf. Ein an dem Flaschenhals durch einen Drehverschluß festlegbares Aufsatzteil ist zu den beiden Verschlußscheiben relativ drehbar und erlaubt mittels einer Anschlußröhre eine gemeinsame Drehung der beiden Verschlußscheiben relativ zu dem Flaschenhals und auch relativ zueinander. In einer ersten relativen Drehlage der beiden Verschlußscheiben wird eine Abdeckung der Auslaßöffnung der einen Verschlußscheibe durch die zweite Verschlußscheibe erhalten. In einer zweiten relativen Drehlage wird andererseits eine deckungsgleiche Anordnung der Auslaßöffnungen der beiden Verschlußscheiben für einen über die Anschlußröhre vermittelten Auslaß des Fluids erhalten. Die beiden Verschlußscheiben sind daneben noch mit einem zweiten Paar von ebenfalls außermittig ausgebildeten Öffnungen versehen, welche wie die einen Auslaßöffnungen in der vorerwähnten zweiten relativen Drehlage der beiden Verschlußscheiben an einer zweiten Anschlußröhre der Verschlußeinrichtung eine offene Verbindung mit dem Fluidbehälter ergeben. Das Aufsatzteil ist ein Geräteteil eines Dentalgerätes, dessen für eine Zahnbehandlung vorgesehenes Handstück über die Saugleitung einer Saugpumpe an die Anschlußröhre des Aufsatzteils angeschlossen wird, sodaß das Fluid über diese Anschlußröhre einer mit dem Aufsatzteil an dem Dentalgerät festgelegten Flasche entnommen werden kann. In der Anschlußröhre ist dabei noch ein Rückschlagventil enthalten, dessen Ventilkörper durch eine Schließfeder in eine Schließlage an der Anschlußröhre vorgespannt wird. Der Ventilkörper wird gegen die Kraft der Schließfeder in eine Öffnungslage überführt, sobald die Saugpumpe einen Saugdruck für die Entnahme des Fluids aus der Flasche entwickelt. Die zweite Anschlußröhre des Aufsatzteils ist andererseits für die Zuleitung von Druckluft in das Innere der Flasche vorgesehen, um damit den Unterdruck auszugleichen, der sich bei der Entnahme des Fluids in der Flasche entwickeln kann und um gleichzeitig das Absaugen des Fluids und dessen Zuleitung über die weiterführende Druckleitung der Saugpumpe an das Handstück zu unterstützen. Die bekannte Verschlußeinrichtung ist relativ aufwändig ausgeführt und ergibt auch einen komplizierten Funktionsablauf für die Zuleitung eines Fluids an ein mit dem Dentalgerät verbundenes Handstück, abgesehen von der Notwendigkeit einer aufwändigen Anpassung der Geräteanschlüsse an die beiden Anschlußröhren der Einrichtung.

Der Erfindung liegt die Aufgabe zugrunde, ein Dentalgerät sowie einen Fluidbehälter bereitzustellen, die beide wesentlich einfacher ausgebildet sind als die vorbeschriebene bekannte Verschlußeinrichtung und die auch einen weniger komplizierten Funktionsablauf erlauben, sodaß der Anschluß eines Fluidbehälters bei einem Dentalgerät entsprechend einfacher vorgenommen werden kann und es gleichzeitig auch möglich ist, die für den Anschluß zu treffenden Vorkehrungen weniger kostspielig auszuführen.

Diese Aufgabe wird durch ein Dentalgerät gemäß Anspruch 5 gelöst.

Die Aufgabe wird andererseits bei einem Fluidbehälter der durch den Oberbegriff des Patentanspruches 1 angegebenen Art dadurch gelöst, daß an einem Anschlußteil des Fluidbehälters zwei Rückschlagventile angeordnet sind, von welchen ein Ventilkörper des einen Rückschlagventils an einer Auslaßöffnung des Fluidbehälters durch ein Gegenstück gegen die Kraft einer Schließfeder in eine Öffnungslage drückbar ist und ein Ventilkörper des zweiten Rückschlagventils an einer Belüftungsöffnung des Fluidbehälters einen Unterdruck ausgleicht, der sich in dem Fluidbehälter bei einer Entnahme des Fluids in der Öffnungslage des Ventilkörpers des einen Rückschlagventils ausbildet.

Bei der erfindungsgemäßen Einrichtung wird damit eine einfache Anschlußmöglichkeit eines Fluidbehälters erhalten. Dabei steht eine besonders dann auch billig zu fertigende und wenig störanfällige Ausführungsform zur Verfügung, wenn gemäß einer deshalb auch bevorzugten Ausführungsform die beiden Rückschlagventile an einem deckelförmigen Aufsatzstück angeordnet sind, welches durch einen Drehverschluß mit einer Ausführungsform bsp. als ein Schraubverschluß an dem Fluidbehälter festlegbar ist. In diesem Fall muß dann lediglich ein üblicher Schraubdeckel von einem für einen Anschluß an ein Dentalgerät ausgewählten Fluidbehälter abgeschraubt und durch ein solches mit den beiden Rückschlagventilen versehenes Aufsatzstück ersetzt werden. Das Aufsatzstück kann dann mit einem das eine Verschluß-Rückschlagventil aufnehmenden zapfenförmigen Anschlußstutzen in ein als eine topfförmige Vertiefung ausgebildetes Aufnahmeteil des Dentalgerätes eingesteckt werden. Der Einsteckvorgang ist dabei mit einer simultanen Öffnung des Verschluß-Rückschlagventils durch einen vorstehenden Dorn am Boden des Aufnahmeteils gekoppelt und ergibt so einen Anschluß für den Fluidbehälter für die spätere Entnahme des Fluids mittels der angeschlossenen Saugpumpe.

Weitere vorteilhafte und zweckmäßige Ausbildungen des erfindungsgemäßen Dentalgeräts sind in den Patenansprüchen 5 bis 12 und 14 angegeben, und ebenfalls zweckmäßige und vorteilhafte Ausbildungen des erfindungsgemäßen Fluidbehälters sind andererseits mit den Merkmalen der Ansprüche 1 bis 4 angegeben,

Ein Ausführungsbeispiel des erfindungsgemäßen Dentalgeräts ist in der Zeichnung schematisch dargestellt und wird nachfolgend näher beschrieben. Es zeigt
- Fig. 1: eine Schemadarstellung eines Dentalgerätes, bei welchem die Einrichtung eingegliedert ist,
- Fig. 2: eine Schnittdarstellung der Einrichtung gemäß einer bevorzugten Ausführungsform und
- Fig. 3: die in Fig. 2 gezeigte Einzelheit A in vergrößertem Maßstab.

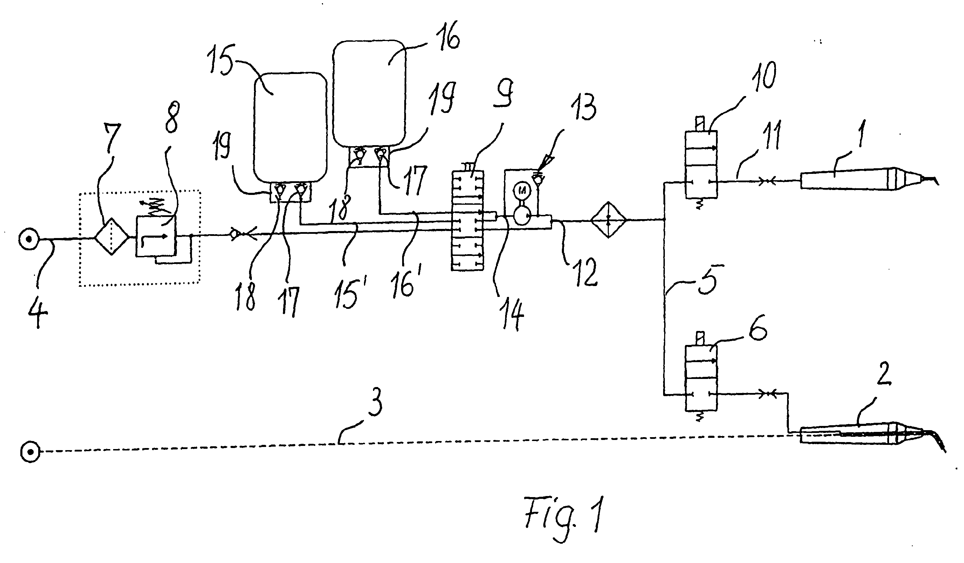

Für die Schemadarstellung der Fig. 1 ist ein Dentalgerät berücksichtigt, das prinzipiell eine gleiche Ausbildung aufweisen kann wie das Abrasivstrahlgerät gemäß der EP 0 097 288 B1. Diese Druckschrift kann daher zur Ergänzung der Beschreibung des Ausführungsbeispieles der vorliegenden Erfindung berücksichtigt werden.

Das Dentalgerät ist für eine mögliche Zahnbehandlung wahlweise mittels zweier Handstücke 1 und 2 ausgebildet. Das eine Handstück 1 ist dabei ein für eine Ultraschallbehandlung ausgebildeter Scaler. Das zweite Handstück 2 ist ein mit einem integrierten Pulverbehälter ausgebildetes Abrasivstrahlgerät, das eine Pulverbestrahlung der Zahnoberflächen mit einem Luft-Pulver-Gemisch ermöglicht, wobei die Luft über eine angeschlossene Luftzuleitung 3 dem Handstück 2 für eine Vermischung mit dem in dem integrierten Pulverbehälter enthaltenen Pulver zugeleitet wird. Das Handstück 2 kann bsp. eine Ausbildung gemäß der EP 0 870 477 B1 aufweisen und hat für diese Ausbildung noch einen getrennten Anschluß an eine Zuleitung 4 für Frischwasser, wobei diese Zuleitung durch ein in einem Leitungszweig 5 angeordnetes Umschaltventil 6 vermittelt wird.

In der Zuleitung 4 für Frischwasser sind hintereinander ein Filter 7, ein Druckregler 8 und ein Wegeventil 9 angeordnet, durch welches die Leitung 4 über ein weiteres Umschaltventil 10 zu einer Anschlußleitung 11 an das Handstück 1 durchschaltbar ist. Zu der Anschlußleitung 11 ist über das Umschaltventil 10 auch die Druckleitung 12 einer Saugpumpe 13 durchschaltbar, deren Saugleitung 14 durch das Wegeventil 9 wahlweise mit einem ersten Fluidbehälter 15 und mit einem zweiten Fluidbehälter 16 verbunden ist. Die Anschlußleitungen 15' und 16' an diese beiden Fluidbehälter 15 und 16 ergeben also in zwei weiteren Schaltstellungen des Wegeventils 9 eine Verbindung mit der Saugleitung 14 der Saugpumpe 13, sodaß dann weiterhin über deren weiterführende Druckleitung 12 und das Umschaltventil 10 eine Durchschaltung zu der Anschlußleitung 11 des Handstückes 1 erhalten werden kann alternativ zu der Durchschaltung der Zuleitung 4 für Frischwasser in einer dritten Schaltstellung des Wegeventils 9 und in einer betreffenden Umschaltstellung des Umschaltventils 10.

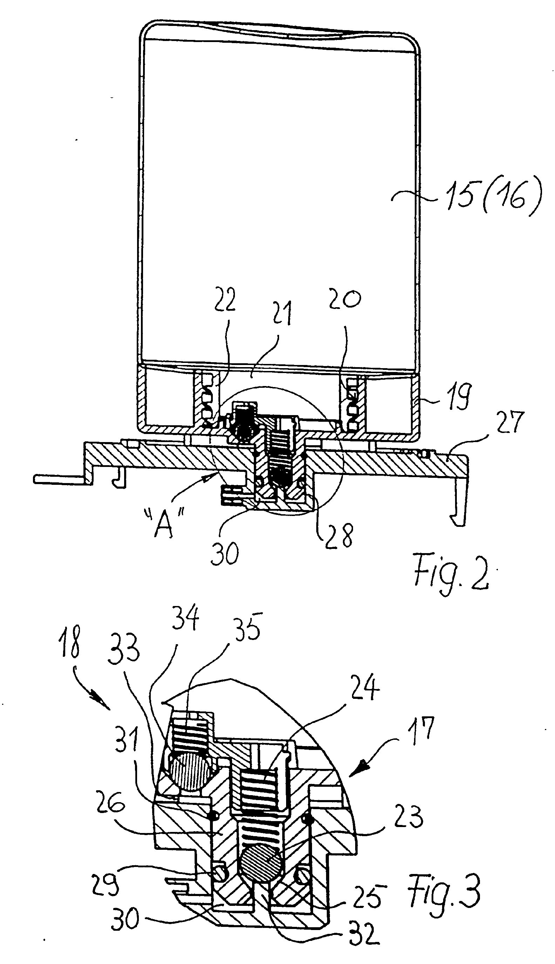

Die beiden Fluidbehälter 15 und 16 sind jeweils mit zwei Rückschlagventilen 17 und 18 versehen, die an einem Aufsatzstück 19 angeordnet sind. Wie aus der Schnittdarstellung in Fig. 2 ersichtlich ist, ist jedes Aufsatzstück 19 deckelförmig ausgebildet und über einen Schraubverschluß 20 mit einem an einer Füllöffnung 21 ausgebildeten Füllstutzen 22 jedes Behälters 15, 16 verschraubbar. Der Schraubverschluß 20 ist mit einem Innengewinde des deckelförmigen Aufsatzstückes 19 und einem Außengewinde des Füllstutzens 22 ausgebildet.

Wie ebenfalls aus Figs. 2 und 3 ableitbar ist, sind die beiden Rückschlagventile 17, 18 als Kugelventile ausgebildet. Die Ventilkugel 23 des einen Rückschlagventils 17 ist durch eine Schließfeder 24 gegen einen Ventilsitz 25 vorgespannt, der mit einer Bohrung eines zapfenförmigen Anschlußstutzens 26 an der zu dem Schraubverschluß 20 gegenüberliegenden Seite des deckelförmigen Aufsatzstückes 19 ausgebildet ist. Über diesen zapfenförmgien Anschlußstutzen 26 ist das Aufsatzstück 19 in ein als eine topfförmige Vertiefung in einer oberen Gehäusewand 27 ausgebildetes Aufnahmeteil 28 einsteckbar und wird für diese Steckverbindung durch eine Ringdichtung 29 gegen eine bodenseitigen Freiraum 30 abgedichtet, an welchen bei den beiden Fluidbehältern 15 und 16 die Leitungen 15' und 16' angeschlossen sind. Mit einem Federring 31 wird diese Relativlage des Anschlußstutzens 26 innerhalb der Vertiefung des Aufnahmeteils 28 fest eingestellt. An dem Boden des Aufnahmeteils 28 ist noch ein nach oben vorstehender Dorn 32 ausgebildet, der beim Einstecken des zapfenförmigen Anschlußstutzens 26 in die topfförmige Vertiefung des Aufnahmeteils 28 die Ventilkugel 23 von ihrem Ventilsitz 25 wegdrückt, sodaß dann zu der angeschlossenen Leitung 15', 16' eine offene Verbindung mit dem zugeordneten Fluidbehälter 15, 16 besteht und damit eine Austrittmöglichkeit für das mit diesem Fluidbehälter bevorratete Fluid. Das Fluid kann daher bei eingeschialteter Saugpumpe 13 unter Mitwirkung des Wegeventils 9 und des Umschaltventils 10 an das Handstück 1 weitergeleitet werden.

Das Aufsatzstück 19 ist weiterhin mit einer Belüftungsöffnung 33 versehen, welche durch eine Ventilkugel 34 des zweiten Rückschlagventils 18 unter der Wirkung einer Schließfeder 35 verschlossen wird. Über die Belüftungsöffnung 33 besteht an einem zwischen dem Aufsatzstück 19 und der oberen Gehäusewand 27 des Dentalgerätes vorhandenen Luftspalt eine Verbindung des Fluidbehäters mit der Umgebung. Mit diesem Rückschlagventil 18 kann daher ein in dem Fluidbehälter entstehender Unterdruck ausgeglichen werden, wenn das Fluid bei geöffnetem Verschluß-Rückschlagventil 17 aus dem Fluidbehälter über den angeschlossenen Zweig der Saugleitung 14 der Saugpumpe 13 abgesaugt und dann über deren weiterführende Druckleitung 12 dem Handstück 1 zugeleitet wird.

Wenn das in den Fluidbehältern 15, 16 enthaltene Fluid aufgebraucht ist, dann ist es lediglich erforderlich, die leeren Behälter aus dem Aufnahmeteil 28 des Dentalgerätes zu entnehmen. Sofern die vollen Ersatzbehälter nicht bereits mit einem eigenen Aufsatzstück versehen sind, muß dann nur noch das Aufsatzstück von dem leeren Fluidbehälter abgeschraubt und nach dem Entfernen eines Verschlußdekkels auf den vollen Ersatzbehälter aufgeschraubt werden, wobei durch die beiden Rückschlagventile sichergestellt ist, daß dann kein Fluid aus dem Fluidbehälter ausfließen kann. Ein Ausfließen des Fluids wird andererseits erst dann erhalten, wenn der Ersatzbehälter mit dem zapfenförmigen Anschlußstutzen 26 in die topfförmige Vertiefung des Aufnahmeteils 28 eingesteckt wird. Bei diesem Einstecken wird dann die Ventilkugel 23 durch den Dorn 32 automatisch von ihrem Ventilsitz 25 weggedrückt und wird der mit dem Federring 31 automatisch erhaltene Freiraum 30 durch die Ringdichtung 29 abgedichtet. Das Fluid kann daher über die an das Aufnahmeteil 28 angeschlossene Saugleitung der Saugpumpe 13 und deren weiterführende Druckleitung 12 dem Handstück 1 zugeleitet werden.

## Patentansprüche

1. Fluidbehälter, der ein Fluid enthält, welches bei einem Dentalgerät zur Versorgung eines für eine Zahnbehandlung verwendeten Handstückes (1,2) dient, **dadurch gekennzeichnet, dass** an einem Anschlussteil (19, 26) des Fluidbehälters (15, 16) zwei Rückschlagventile (17, 18) angeordnet sind, von welchen ein Ventilkörper (23) des einen Rückschlagventils (17) an einer Auslassöffnung (21) des Fluidbehälters (15, 16) durch ein am Dentalgerät angeordnetes Gegenstück (32) gegen die Kraft einer Schließfeder (24) in eine Öffnungslage drückbar ist und ein Ventilkörper (34) des zweiten Rückschlagventils (18) an einer Belüftungsöffnung (33) des Fluidbehälters (15, 16) einen Unterdruck auszugleichen vermag, der sich in dem Fluidbehälter (15, 16) bei einer Entnahme des Fluids in der Öffnungslage des Ventilkörpers (23) des einen Rückschlagsventils (17) ausbildet.

2. Fluidbehälter nach Anspruch 1, wobei die beiden Rückschlagventile (17, 18) an einem deckelförmigen Aufsatzstück (19) angeordnet sind, welches durch einen an seiner einen Seite vorgesehen Drehverschluss (20) über einer für das Fluid vorgesehenen Füllöffnung (21) an dem Fluidbehälter (15, 16) festlegbar ist und an seiner gegenüberliegenden Seite einen das eine Rückschlagventil (17) aufnehmenden zapfenförmigen Anschlussstutzen (26) aufweist, der mit einem korrespondierenden Aufnahmeteil (28) eines Dentalgerätes zusammenpasst.

3. Fluidbehälter nach Anspruch 2, wobei der Drehverschluss als ein Schraubverschluss (20) ausgebildet ist, bei welchem ein Innengewinde des Aufsatzstückes (19) mit einem komplementär ausgebildeten Außengewinde an einem Halsstück (22) des Fluidbehälters (15, 16) zusammenpasst, wobei auf das Außengewinde ein Verschlussdeckel des Fluidbehälters (15, 16) aufschraubbar ist.

4. Fluidbehälter nach einem der Ansprüche 1 bis 3, wobei die beiden Rückschlagventile (17, 18) als Kugelventile ausgebildet sind.

5. Dentalgerät mit einer Einrichtung zum Anschluß eines Fluidbehälters (15, 16) nach einem der Ansprüche 1-4, der ein Fluid enthält, umfassend eine Saugpumpe (13), ein Aufnahmeteil (28) und eine Saugleitung (14), wobei das Fluid durch die Saugpumpe (13) des Dentalgerätes einem für eine Zahnbehandlung verwendeten Handstück (1) ventilgesteuert zuleitbar ist,
wobei die Saugpumpe (13) über die mit dem Aufnahmeteil (28) des Dentalgerätes verbundene Saugleitung (14) an ein von dem Aufnahmeteil aufnehmbares Anschlußteil (19, 26) des Fluidbehälters anschließbar ist, und
wobei ein Gegenstück (32) an dem Aufnahmeteil (28) vorgesehen ist, um einen Ventilkörper (23) eines an dem Anschlussteil (19, 26) des Fluidbehälters (15, 16) vorgesehenen Verschluss-Rückschlagventils (17) entgegen der Kraft einer in eine Schließlage wirkenden Schließfeder (24) in eine Öffnungslage zu drücken.

6. Dentalgerät nach Anspruch 5, wobei das Aufnahmeteil (28) in einer oberen Gehäusewand (27) des Dentalgerätes als eine topfförmige Vertiefung ausgebildet ist, in welcher mit einer Steckverbindung das mit den beiden Rückschlagventilen (17, 18) versehene Anschlussteil (19, 26) des Fluidbehälters (15, 16) aufnehmbar ist.

7. Dentalgerät nach Anspruch 5 oder 6, wobei das für die Öffnung des Verschluss-Rückschlagventils (17) vorgesehene Gegenstück als ein von einem Boden der topfförmigen Vertiefung des Aufnahmeteils (28) nach oben vorstehender Dorn (32) ausgebildet ist, der ausgebildet ist, den Ventilkörper (23) des Rückschlagventils (17) für eine Durchschaltung der Saugpumpe (13) hin zu dem Fluidbehälter (15, 16) über die nahe dem Boden des Aufnahmeteils (28) angeschlossene Saugleitung (14) von seinem Ventilsitz (25) an dem Anschlussteil (19, 26) des Fluidbehälters (15, 16) wegzudrücken.

8. Dentalgerät nach einem der Ansprüche 6 oder 7, wobei die Steckverbindung zwischen dem Anschlussteil (19, 26) des Fluidbehälters (15, 16) und dem Aufnahmeteil (28) des Dentalgerätes durch wenigstens einen Dichtungsring (29) abdichtbar und durch einen Federring (31) festlegbar ist.

9. Dentalgerät nach einem der Ansprüche 5 bis 8, wobei in der Saugleitung (14) der Saugpumpe (13) ein Wegeventil (9) angeordnet ist, durch welches das mit der weiterführenden Druckleitung (12) der Saugpumpe (13) verbundene Handstück (1) für einen abwechselnden Anschluss mit zwei Fluidbehältern (15, 16) umgeschaltet werden kann, die verschiedene Fluids enthalten und von zwei verschiedenen Aufnahmeteilen (28) des Dentalgerätes aufgenommen sind, an welche die Saugpumpe mit zwei Zweigleitungen (15', 16') der Saugleitung angeschlossen ist.

10. Dentalgerät nach Anspruch 9, wobei das Handstück (1) durch das Wegeventil (9) auf einen Anschluss an eine Zuleitung (4) für Frischwasser umschaltbar ist.

11. Dentalgerät nach Anspruch 10, wobei die Zuleitung (4) für Frischwasser oder die Zuleitung (12) eines Fluids aus einem Fluidbehälter (15, 16) durch zwei dem Wegeventil (9) nachgeschaltete Umschaltventile (6, 10) für einen wahlweisen Anschluss an das eine Handstück (1) oder an ein zweites Handstück (2) umschaltbar ist.

12. Dentalgerät nach Anspruch 11, wobei das eine Handstück (1) ein für eine Ultraschallbehandlung der Zähne ausgebildeter Scaler und das zweite Handstück (2) ein mit einem integrierten Pulverbehälter ausgebildetes Abrasivstahlgerät ist, welches neben einem Wasseranschluss (5) noch einen Druckluftanschluss (3) aufweist.

13. Dentalgerät zur Zahnbehandlung nach einem der Ansprüche 5-12, umfassend einen Fluidbehälter (15, 16) nach einem der Ansprüche 1 bis 4.

14. Dentalgerät nach Anspruch 13, wobei eine Steckverbindung zwischen dem Anschlussteil (19, 26) des Fluidbehälters (15, 16) und dem Aufnahmeteil (28) des Dentalgerätes durch wenigstens einen Dichtungsring (29) abgedichtet und durch einen Federring (31) festgelegt ist.

## Claims

1. Fluid reservoir containing a fluid, which is used in a dental apparatus to supply a handset (1, 2) used for a dental treatment, **characterised in that** on a connecting part (19, 26) of the fluid container (15, 16) two check valves (17, 18) are disposed, of which a valve body (23) of the one check valve (17) on an outlet aperture (21) of the fluid reservoir (15, 16) is pressable by a counter-member (32) disposed on the dental apparatus against the force of a closing spring (24) and into an open position, and a valve body (34) of the second check valve (18) on an aeration aperture (33) of the fluid reservoir (15, 16) can compensate for any low pressure which develops in the fluid reservoir (15, 16) upon drawing off of the fluid in the open position of the valve body (23) of the one check valve (17).

2. Fluid reservoir according to claim 1, wherein the two check valves (17, 18) are disposed on a cap-like attachment (19), which is fixable on the fluid reservoir (15, 16) by a rotary seal (20) provided on its one side over a filling aperture (21) provided for the fluid and which has on its opposite side a spigot-like connecting piece (26) receiving the one check valve (17) and fitting together with a corresponding receiving part (28) of a dental apparatus.

3. Fluid reservoir according to claim 2, wherein the rotary seal is formed as a screw seal (20), in which an internal thread of the attachment (19) fits together with a complementarily formed external thread on a neck (22) of the fluid reservoir (15, 16), in which case a sealing cap of the fluid reservoir (15, 16) may be screwed on to the external thread.

4. Fluid reservoir according to one of claims 1 to 3, wherein both check valves (17, 18) are formed as ball valves.

5. Dental apparatus having an arrangement for connecting a fluid reservoir (15, 16) according to one of claims 1-4, which contains a fluid, comprising a suction pump (13), a receiving part (28) and a suction line (14), wherein the fluid may be supplied controlled by valves through the suction pump (13) of the dental apparatus to a handset (1) used for dental treatment, wherein the suction pump (13) may be connected via the suction line (14) connected to the receiving part (28) of the dental apparatus to a connecting part (19, 26) of the fluid reservoir receivable by the receiving part and wherein a counter-member (32) is provided on the receiving part (28) in order to push a valve body (23) of a seal check valve (17) provided on the connecting part (19, 26) of the fluid reservoir (15, 16) into an opening position against the force of a closing spring (24) acting in a closing position.

6. Dental apparatus according to claim 5, wherein the receiving part (28) is formed in an upper housing wall (27) of the dental apparatus as a cup-shaped recess, in which the connecting part (19, 26) of the fluid reservoir (15, 16) provided with the two check valves (17, 18) is receivable with a plug-in connection.

7. Dental apparatus according to claim 5 or 6, wherein the counter-member provided for the opening of the seal check valve (17) is formed as a pin (32) projecting upwards from a base of the cup-shaped recess of the receiving part (28), the pin pushing the valve body (23) of the check valve (17) away from its valve seat (25) on the connecting part (19, 26) of the fluid reservoir (15, 16) for through-connection of the suction pump (13) to the fluid container (15 , 16) via the suction line (14) connected close to the base of the receiving part (28).

8. Dental apparatus according to one of claims 6 or 7, wherein the plug-in connection between the connecting part (19, 26) of the fluid reservoir (15, 16) and the receiving part (28) of the dental apparatus may be sealed by at least one sealing ring (29) and fixed by a spring ring (31).

9. Dental apparatus according to one of claims 5 to 8, wherein a directional valve (9) is disposed in the suction line (14) of the suction pump (13), by means of which directional valve the handset (1) connected to the onward pressure line (12) of the suction pump (13) can be switched over for alternative connection to two fluid reservoirs (15, 16) which contain different fluids and are received by two different receiving parts (28) of the dental apparatus, to which the suction pump is connected with two branch lines (15', 16') of the suction line.

10. Dental apparatus according to claim 9, wherein the handset (1) can be switched over by the direction valve (9) to connection to a supply line (4) for fresh water.

11. Dental apparatus according to claim 10, wherein the supply line (4) for fresh water or the supply (12) of a fluid from a fluid reservoir (15, 16) may be switched over by two switch-over valves (6, 10) connected in series to the directional valve (9) for selective connection to the one handset (1) or to a second handset (2).

12. Dental apparatus according to claim 11, wherein the one handset (1) is a scaler formed for an ultrasound treatment of the teeth and the second handset (2) is an abrasive blast tool formed with an integral powder reservoir, having in addition to a water connection (5) a compressed air connection (3).

13. Dental apparatus for dental treatment according to one of claims 5-12, comprising a fluid reservoir (15, 16) according to one of claims 1 to 4.

14. Dental apparatus according to claim 13, wherein a plug-in connection between the connecting part (19, 26) of the fluid reservoir (15, 16) and the receiving part (28) of the dental apparatus is sealed by at least one sealing ring (29) and is fixed by a spring ring (31).

## Revendications

1. Réservoir de fluide qui contient un fluide qui sert, dans un appareil dentaire, à alimenter une pièce à main (1, 2) utilisée pour un traitement dentaire, **caractérisé en ce que** deux clapets antiretour (17, 18) sont disposés sur une pièce de raccordement (19, 26) du réservoir de fluide (15, 16), un corps de clapet (23) du premier clapet antiretour (17) à une ouverture de sortie (21) du réservoir de fluide (15, 16) pouvant être poussé dans une position d'ouverture par une pièce complémentaire (32) contre la force d'un ressort de fermeture (24) et un corps de clapet (34) du second clapet antiretour (18) à une ouverture de ventilation (33) du réservoir de fluide (15, 16) étant capable de compenser une dépression qui se forme dans le réservoir de fluide (15, 16) lors d'un prélèvement du fluide dans la position d'ouverture du corps de clapet (23) du premier clapet antiretour (17).

2. Réservoir de fluide selon la revendication 1, dans lequel les deux clapets antiretour (17, 18) sont disposés sur une pièce rapportée (19) en forme de couvercle qui peut être fixée au réservoir de fluide (15, 16) par une fermeture tournante (20) prévue sur un de ses côtés par l'intermédiaire d'une ouverture de remplissage (21) prévue pour le fluide sur le réservoir de fluide (15, 16) et qui présente, sur son côté opposé, une tubulure de raccordement (26) en forme de tenon qui reçoit un clapet antiretour (17) et qui coopère avec une pièce réceptrice (28) correspondante d'un appareil dentaire.

3. Réservoir de fluide selon la revendication 2, dans lequel la fermeture tournante est réalisée sous la forme d'une fermeture à vis (20) dans laquelle un filetage intérieur de la pièce rapportée (19) coopère avec un filetage extérieur complémentaire sur un goulot (22) du réservoir de fluide (15, 16), un couvercle de fermeture du réservoir de fluide (15, 16) pouvant être vissé sur le filetage extérieur.

4. Réservoir de fluide selon l'une des revendications 1 à 3, dans lequel les deux clapets antiretour (17, 18) sont réalisés sous la forme de clapets à bille.

5. Appareil dentaire avec un dispositif pour le raccordement d'un réservoir de fluide (15, 16) selon l'une des revendications 1 à 4 qui contient un fluide, comprenant une pompe aspirante (13), une pièce réceptrice (28) et une conduite d'aspiration (14),
le fluide pouvant être amené, de manière commandée par des vannes, par la pompe aspirante (13) de l'appareil dentaire à une pièce à main (1) utilisée pour un traitement dentaire,
la pompe aspirante (13) pouvant être raccordée, par l'intermédiaire de la conduite d'aspiration (14) reliée à la pièce réceptrice (28) de l'appareil dentaire, à une pièce de raccordement (19, 26) du réservoir de fluide qui peut être reçue par la pièce réceptrice, et
une pièce complémentaire (32) étant prévue sur la pièce réceptrice (28) pour pousser dans une position d'ouverture un corps de clapet (23) d'un clapet antiretour de fermeture (17) prévu sur la pièce de raccordement (19, 26) du réservoir de fluide (15, 16) contre la force d'un ressort de fermeture (24) agissant dans une position de fermeture.

6. Appareil dentaire selon la revendication 5, dans lequel la pièce réceptrice (28) est réalisée dans une paroi de boîtier supérieure (27) de l'appareil dentaire sous la forme d'un renfoncement en forme de pot dans lequel la pièce de raccordement (19, 26) du réservoir de fluide (15, 16) qui est munie des deux clapets antiretour (17, 18) peut être reçue au moyen d'une liaison par emboîtement.

7. Appareil dentaire selon la revendication 5 ou 6, dans lequel la pièce complémentaire prévue pour l'ouverture du clapet antiretour de fermeture (17) est réalisée sous la forme d'une broche (32) en saillie vers le haut depuis un fond du renfoncement en forme de pot de la pièce réceptrice (28), laquelle broche (32) est conçue pour repousser de son siège de clapet (25) sur la pièce de raccordement (19, 26) du réservoir de fluide (15, 16) le corps de clapet (23) du clapet antiretour (17) pour connecter la pompe aspirante (13) au réservoir de fluide (15, 16) par l'intermédiaire de la conduite d'aspiration (14) raccordée près du fond de la pièce réceptrice (28).

8. Appareil dentaire selon l'une des revendications 6 ou 7, dans lequel la liaison par emboîtement entre la pièce de raccordement (19, 26) du réservoir de fluide (15, 16) et la pièce réceptrice (28) de l'appareil dentaire peut être rendue étanche par au moins un joint d'étanchéité annulaire (29) et fixée par une rondelle-ressort (31).

9. Appareil dentaire selon l'une des revendications 5 à 8, dans lequel un distributeur (9) est disposé dans la conduite d'aspiration (14) de la pompe aspirante (13), par lequel la pièce à main (1) reliée à la conduite de refoulement (12) qui repart de la pompe aspirante (13) peut être commutée pour être raccordée alternativement à deux réservoirs de fluide (15, 16) qui contiennent des fluides différents et sont reçus par deux pièces réceptrices (28) différentes de l'appareil dentaire auxquelles la pompe aspirante est raccordée par deux conduites dérivées (15', 16') de la conduite d'aspiration.

10. Appareil dentaire selon la revendication 9, dans lequel la pièce à main (1) peut être commutée par le distributeur (9) sur un raccordement à une conduite d'amenée (4) d'eau fraîche.

11. Appareil dentaire selon la revendication 10, **caractérisé en ce que** la conduite d'amenée (4) d'eau fraîche ou la conduite d'amenée (12) d'un fluide provenant d'un réservoir de fluide (15, 16) peut être commutée par deux vannes de commutation (6, 10) placées en aval du distributeur (9) pour un raccordement au choix à une première pièce à main (1) ou à une seconde pièce à main (2).

12. Appareil dentaire selon la revendication 11, dans lequel la première pièce à main (1) est un détartreur conçu pour un traitement des dents par ultrasons et la seconde pièce à main (2) est un appareil dentaire à jet abrasif conçu avec un réservoir de poudre intégré qui, outre un raccord d'eau (5), présente un raccord d'air comprimé (3).

13. Appareil dentaire pour le traitement dentaire selon l'une des revendications 5 à 12, comprenant un réservoir de fluide (15, 16) selon l'une des revendications 1 à 4.

14. Appareil dentaire selon la revendication 13, dans lequel une liaison par emboîtement entre la pièce de raccordement (19, 26) du réservoir de fluide (15, 16) et la pièce réceptrice (28) de l'appareil dentaire est rendue étanche par au moins un joint d'étanchéité annulaire (29) et fixée par une rondelle-ressort (31).
